# EUROPÄISCHE PATENTSCHRIFT

(11) **EP 1 178 191 B1**
(45) Veröffentlichungstag und Bekanntmachung des Hinweises auf die Patenterteilung: **17.03.2004**
(21) Anmeldenummer: 01114280.9
(22) Anmeldetag: 13.06.2001
(51) Int. Cl.: F02B 37/12, F02B 37/16

(54) **Abgas-Turbolader für Brennkraftmaschinen**
Exhaust gas turbocharger for internal combustion engines
Turbocompresseur à gaz d'échappement pour moteurs à combustion interne

(30) Priorität: 04.08.2000 DE 10038244
(43) Veröffentlichungstag der Anmeldung: 06.02.2002
(73) Patentinhaber: Bayerische Motoren Werke Aktiengesellschaft, 80809 München (DE)
(72) Erfinder: Staub, Peter, 4540 Bad Hall (AT); Barth, Wilfried, 4341 Arbing (AT); Schindler, Erik, 3300 Amstetten (AT)

(56) Entgegenhaltungen:
- DE-A- 3 821 532
- DE-A- 3 936 566
- GB-A- 2 077 354
- US-A- 3 568 435
- PATENT ABSTRACTS OF JAPAN vol. 013, no. 130 (M-808), 30. März 1989 (1989-03-30) & JP 63 297731 A (KANESAKA GIJUTSU KENKYUSHO:KK), 5. Dezember 1988 (1988-12-05)

## Beschreibung

Die Erfindung bezieht sich nach dem Oberbegriff des Patentanspruches 1 auf einen Abgas-Turbolader für Brennkraftmaschinen, bei dem einem Ladergehäuse und/oder einem Verdichtergehäuse jeweils eine Zuströmleitung zugeordnet ist, die mit einem den Lader und/oder den Verdichter steuerbar umgehenden Bypass ausgebildet ist.

Ein derartiger Abgas-Turbolader ist als Hochdrucklader beispielsweise aus der schematischen Darstellung einer Brennkraftmaschine mit einer zweistufigen, schaltbaren Abgas-Turbolader-Anordnung aus Fig. 1 der DE 39 33 518 C2 bekannt, deren Anmeldegegenstand sich auf die Steuerung eines die Hochdruckturbine umgehenden Bypasses bezieht. Reale Ausgestaltungen der ladeluft- und abgasführenden Leitungen einschließlich der erforderlichen Bypass-Leitungen sind für dieses bekannte Turbolader-System nicht aufgezeigt.

In der deutschen Patentanmeldung P 100 14 755 wurde für eine Brennkraftmaschine mit einer zweistufigen, schaltbaren Abgas-Turbolader-Anordnung zur Erzielung einer zumindest kompakten Baueinheit abgasführender Teile und Leitungen vorgeschlagen, dass ein motorseitiger Abgas-Sammler über einen in einem Sammler-Endbereich angeordneten ersten Auslass mit einer Hochdruck-Turbine und über einen im Mittenbereich angeordneten zweiten Auslass mit einer Niederdruck-Turbine abgasführend verbunden ist und eine zwischen der Hochdruck-Turbine und der Niederdruck-Turbine vorgesehene Verbindungsleitung von einem zweiten Sammler-Auslass gesondert das Abgas der Niederdruck-Turbine zuführt, wobei ein dem zweiten Sammler-Auslass zugeordneter, steuerbarer Kanal als Bypass der Hochdruck-Turbine dient. Damit ist insbesondere das Ziel kurzer, abgasführender Leitungen erreicht.

Dokument GB-A-2 077 354 offenbart eine weitere Anordnung, wobei die Strömungsverluste im Abgas reduziert werden können.

Der Erfindung liegt die Aufgabe zugrunde, einen gattungsgemäßen Abgas-Turbolader derart weit zu bilden, dass verkürzte Bypass-Leitungen in Verbindung mit einer kompakten Anordnung bzw. Verlegung dieser Bypass-Leitungen an der Brennkraftmaschine erzielt sind.

Diese Aufgabe ist mit dem Patentanspruch 1 dadurch gelöst, dass ein jeweiliges Gehäuse des Abgas-Turboladers einen einstückig angeordneten, bogenförmig gestalteten Zuström-Stutzen aufweist mit einem im Bogenabschnitt des Zuström-Stutzens über eine Wanddurchbrechung im Wesentlichen tangential anschließenden Bypass-Stutzen.

Weiter sind das jeweilige Gehäuse und der Bypass-Stutzen gesondert ausgebildet und stehen über korrespondierende Anschlagflächen an Zuström-Stutzen und jeweiligem Gehäuse sowie am Bypass-Stutzen miteinander in lösbarer Verbindung.

Mit der erfindungsgemäßen Kombination eines gehäuseintegrierten, bogenförmigen Zuström-Stutzens mit einem im Wesentlichen tangentialen Bypass-Stutzen ergeben sich in vorteilhafter Weise kürzere Bypass-Leitungen, deren Länge durch die erfindungsgemäße Stutzen-Kombination über die damit mögliche angepasste Anordnung zusätzlich sich verkürzen lässt.

Diese Ausgestaltung hat den Vorteil, dass die Wanddurchbrechung des Zuström-Stutzens ventilgesteuert ausgebildet werden kann.

Hierfür wird in weiterer Ausgestaltung der Erfindung vorgeschlagen, dass in dem gesonderten Bypass-Stutzen ein Klappenventil angeordnet ist zur Steuerung der Wanddurchbrechung derart, dass lediglich eine Sperrung des Bypass-Stutzens erzielt ist.

Damit ist einerseits die mehrstufige Aufladung sichergestellt und andererseits mit der Anordnung des Klappenventils im gesonderten Bypass-Stutzen eine einfache Ventil-Anordnung erzielt, die gemäß einer weiteren Ausbildung der Erfindung es ermöglicht, dass das Klappenventil mittels eines Stellmotors betätigbar und ggf. zwischen den Endpositionen für eine angepasste Mengenumleitung gehalten ist.

Für den Fall einer abweichenden Ventil-Anordnung können das jeweilige Gehäuse und der Bypass-Stutzen gemäß einem weiteren Vorschlag auch einstückig verbunden sein.

Bevorzugt ist ein Ladergehäuse erfindungsgemäß mit einem Bypass-Stutzen ausgebildet, jedoch kann die Erfindung auch für ein Verdichtergehäuse Anwendung finden.

Die Erfindung ist an Hand eines in der Zeichnung dargestellten Ausführungsbeispiels beschrieben.

Es zeigt
- Fig. 1: Ein in Draufsicht dargestelltes Ladergehäuse eines nicht weiter gezeigten Abgas-Turboladers,
- Fig. 2: das Ladergehäuse nach Figur 1 im Querschnitt mit einem erfindungsgemäß angeordneten Bypass-Stutzen.

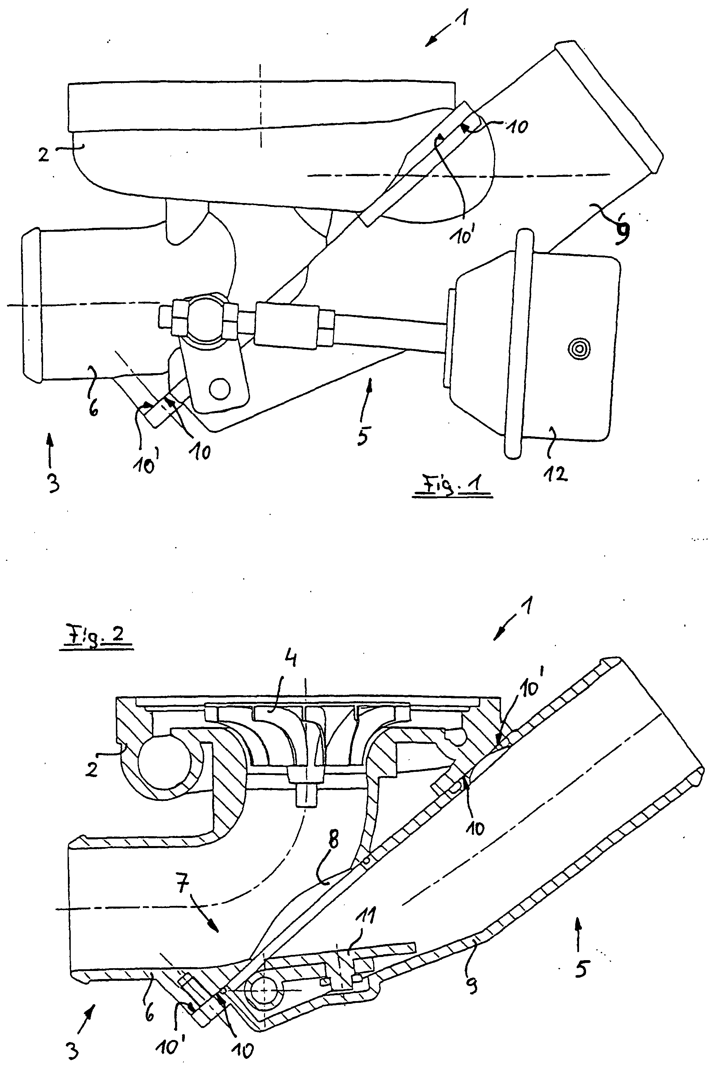

Von einem lediglich abschnittsweise dargestellten Abgas-Turbolader (1) für eine nicht gezeigte Brennkraftmaschine ist dem bevorzugt dargestellten Ladergehäuse (2) eine Zuströmleitung (3) zugeordnet, die mit einem den Lader (4) steuerbar umgehenden Bypass(5) ausgebildet ist.

Zur Erzielung einer verkürzten Bypass-Leitung (5) in Verbindung mit einer kompakten Anordnung bzw. Verlegung dieses Bypasses (5) wird erfindungsgemäß vorgeschlagen, dass das Ladergehäuse (2) des Abgas-Turboladers (1) einen einstückig angeordneten, bogenförmig gestalteten Ladeluft-Zuström-Stutzen (6) aufweist mit einem im Bogenabschnitt (7) des Zuström-Stutzens (6) über eine Wanddurchbrechung (8) im Wesentlichen tangential anschließenden Bypass-Stutzen (9).

Wie aus der Zeichnung weiter hervorgeht, sind das Ladergehäuse (2) und der Bypass-Stutzen (9) gesondert ausgebildet und über korrespondierende Anschlagflächen 10,10' an Zuström-Stutzen (6) und Gehäuse (2) sowie am Bypass-Stutzen (9) miteinander in lösbarer Verbindung ausgebildet.

Diese vorbeschriebene Anordnung hat den Vorteil, dass die Wanddurchbrechung (8) im Zuströmstutzen (6) ventilgesteuert ausgebildet werden kann.

Zur Erzielung einer hierfür einfachen Ventil-Anordnung ist in dem gesonderten Bypass-Stutzen (9) ein Klappenventil (11) angeordnet zur Steuerung der Randdurchbrechung (8) derart, dass lediglich eine Sperrung des Bypass- Stutzens (9) erzielbar ist und somit eine nachteilige Sperrung des Zuström-Stutzens (6) vermieden ist.

Dem insbesondere für eine Hochdruckstufe einer mehrstufig aufgeladenen Brennkraftmaschine dienenden Lader (4) ist in dem integrierten Bypass-Stutzen (9) vorzugsweise ein Klappenventil (11) angeordnet, das mittels eines Stellmotors (12) über eine elektronische Motorsteuerung angesteuert betätigbar ist. Als Stellmotor (12) dient vorzugsweise ein pneumatisch wirkender Stellmotor.

Weitere Vorteile der Erfindung sind:
Platz- und Gewichtssparende Ausführung für eine Brennkraftmaschine in einem PKW,
strömungsgünstige Luftführung der am Hochdruckverdichter vorbeizuführenden Luftmasse,
kein Mehrteileaufwand für Montage und Kundendienst durch Funktionsintegration, geringe Anzahl von Schnittstellen/ Dichtflächen,
gute Regelmöglichkeit durch Selbstregelung oder durch dynamische Schaltstrategie mit Einbindung in eine elektronische Motorsteuerung.

## Patentansprüche

1. Abgas-Turbolader für Brennkraftmaschinen,
- bei dem einem Ladergehäuse (2) und/oder einem Verdichtergehäuse jeweils eine Zuströmleitung (3) zugeordnet ist, die
- mit einem den Lader (4) und/oder den Verdichter steuerbar umgehenden Bypass (5) ausgebildet ist, wobei
- ein jeweiliges Gehäuse (2) des Abgas-Turboladers (1) einen einstückig angeordneten, bogenförmig gestalteten Zuström-Stutzen (6) aufweist mit einem
- im Bogenabschnitt (7) des Zuström-Stutzens (6) über eine Wanddurchbrechung (8) anschließenden Bypass-Stutzen (9),
**dadurch gekennzeichnet, dass**
- das jeweilige Gehäuse (2) und der Bypass-Stutzen (9) gesondert ausgebildet sind und
- über korrespondierende Anschlagflächen (10, 10') an Zuström-Stutzen (6) und jeweiligem Gehäuse (2) sowie an einem im Wesentlichen tangential an dem Zuström-Stutzen anschließenden Bypass-Stutzen (9) miteinander in lösbarer Verbindung stehen.

2. Abgas-Turbolader nach Anspruch 1,
**dadurch gekennzeichnet, dass** die Wanddurchbrechung (8) ventilgesteuert ist.

3. Abgas-Turbolader nach Anspruch 1 oder 2,
**dadurch gekennzeichnet, dass**
- in dem gesonderten Bypass-Stutzen (9) ein Klappenventil (11) angeordnet ist zur Steuerung der Wanddurchbrechung (8) derart, dass,
- lediglich eine Sperrung des Bypass-Stutzens (9) erzielbar ist

4. Abgas-Turbolader nach Anspruch 3,
**dadurch gekennzeichnet, dass**
- das Klappenventil (11) mittels eines Stellmotors (12) betätigbar und
- ggf. zwischen den Endpositionen gehalten ist.

## Claims

1. An exhaust-gas supercharger for internal combustion engines,
- wherein a blower casing (2) and/or a compressor casing are each associated with an inflow line (3), which
- is formed with a bypass (5) for control of the blower (4) and/or the compressor, wherein
- the respective casing (2) of the exhaust-gas supercharger (1) has an integrally formed arcuate inflow nozzle (6) with
- a bypass nozzle (9) adjoining the arcuate portion (7) of the inflow nozzle (6) via a wall aperture (8),
**characterised in that**
- the casing (2) and the bypass nozzle (9) are formed separately and
- are releasably connected to one another via corresponding abutment surfaces (10, 10') on the inflow nozzle (6), on the casing (2), and on a bypass nozzle (9) substantially tangentially adjoining the inflow nozzle.

2. An exhaust-gas supercharger according to claim 1, **characterised in that** the wall aperture (8) is controlled by a valve.

3. An exhaust-gas supercharger according to claim 1 or 2, **characterised in that** a butterfly valve (11) is disposed in the separate bypass nozzle (9) in order to control the wall aperture (8) so that only the bypass nozzle (9) can be blocked.

4. An exhaust-gas supercharger according to claim 3, **characterised in that** the butterfly valve (11) is actuated by a servomotor (12) and is held between the end positions when required.

## Revendications

1. Turbocompresseur à gaz d'échappement pour moteurs à combustion interne, dans lequel
- une conduite d'alimentation (3) est associée à un boîtier de compresseur (2) et/ou à un boîtier de soufflante,
- un by-pass (5) contourne sur commande le compresseur (4) et/ou la soufflante,
- le boîtier (2) du turbocompresseur (1) présente, monobloc avec lui, une tubulure (6) de forme recourbée,
- une tubulure de by-pass (9) est raccordée à la tubulure d'alimentation (6) dans la partie courbe de celle-ci, à travers une ouverture de paroi (8) ,
**caractérisé en ce que**
- le boîtier (2) et la tubulure de by-pass (9) ont des configurations spécifiques,
- le boîtier (2) et la tubulure by-pass (9) sont reliés de manière séparable par des surfaces d'appui correspondantes (10, 10') sur la tubulure d'alimentation (6) et sur le boîtier (2), ainsi que sur la tubulure de by-pass (9) raccordée pour l'essentiel tangentiellement à la tubulure.

2. Turbocompresseur selon la revendication 1,
**caractérisé en ce que**
l'ouverture de paroi (8) est commandée par une soupape.

3. Turbocompresseur selon la revendication 1 ou 2,
**caractérisé en ce que**
dans la tubulure de by-pass (9) spécifique est montée une soupape à clapet (1 1) pour commander l'ouverture de paroi (8), de manière à pouvoir seulement obturer la tubulure de by-pass (9).

4. Turbocompresseur selon la revendication 3,
**caractérisé en ce que**
la soupape à clapet (11) peut être actionnée par un moteur de réglage qui éventuellement la maintient entre ses positions extrêmes.
